# FASCICULE DE BREVET EUROPEEN

(11) **EP 0 447 302 B1**
(45) Date de publication et mention de la délivrance du brevet: **18.05.1994**
(21) Numéro de dépôt: 91400632.5
(22) Date de dépôt: 07.03.1991
(51) Int. Cl.: H04B 1/16, H04Q 7/04, H04M 1/72

(54) **Dispositif de radio communication à multiplexage dans le temps**
Einrichtung für Zeit-Multiplex-Funkkommunikation
Time-multiplexed radio communication device

(30) Priorité: 16.03.1990 FR 9003429
(43) Date de publication de la demande: 18.09.1991
(73) Titulaire: MATRA COMMUNICATION, 29101 Quimper (FR)
(72) Inventeur: Berthoumieux, Didier, F-92170 Clamart (FR); Lambourg, Michel, F-92370 Chaville (FR)
(74) Mandataire: Fruchard, Guy

(56) Documents cités:
- EP-A- 0 315 260
- EP-A- 0 343 528
- PATENT ABSTRACTS OF JAPAN vol. 9, no. 61 (E-303)(1784) 10 mars 85,& JP-A-59 200537 (NIPPON DENSHI DENWA KOSHA) 13 novembre 84,
- IEEE INTERNATIONAL SYMPOSIUM ON CIRCUITS AND SYSTEMS vol. 2, juin 88, ESPOO
- (FI) pages 1803 - 1810; E. KUISMA et al: "Signal Processing Requirements inPan-European Digital Mobile Communications"

## Description

La présente invention concerne un dispositif de radio communication à multiplexage dans le temps, et plus particulièrement un dispositif destiné à être utilisé comme terminal radio dans un réseau de radio communication à multiplexage dans le temps. Ce terminal radio étant mobile, fixe ou portatif, sera appelé station mobile dans la suite de la description pour le distinguer de la base de transmission reliée à un réseau cablé.

On sait que dans un réseau de radio communication à multiplexage dans le temps, les stations mobiles sont équipées d'un dispositif de radio communication permettant une émission et une réception de signaux radio séparés par des intervalles de temps. Ces intervalles de temps entre l'émission et la réception associées à une station mobile sont mis à profit par le réseau pour procéder à une émission ou une réception associée à une autre station mobile.

A cet effet on connaît des dispositifs de radio communication comportant une antenne, un organe émetteur-récepteur couplé à l'antenne, un organe de sélection de canal associé à l'organe émetteur-récepteur, un convertisseur analogique/numérique associé à l'organe de sélection de canal, une unité de traitement numérique associée au convertisseur analogique/numérique et un organe de commande de temps pour commander une vitesse de fonctionnement d'horloges associées à l'unité de traitement numérique et au convertisseur analogique/numérique. Un tel dispositif est par exemple connu du document IEEE INTERNATIONAL SYMPOSIUM ON CIRCUITS AND SYSTEM, vol. 2, juin 88, ESPOO (FI), pages 1803-1810; E. KUISMA et al. : "Signal Processing Requirements in Pan-European Digital Mobile Communications". Avec l'amélioration de la technologie, la vitesse de fonctionnement des horloges s'est accrue considérablement, ce qui a permis d'augmenter la rapidité de traitement de l'unité de traitement numérique. On arrive ainsi à des vitesses de fonctionnement des horloges qui sont telles que des harmoniques d'ordre faible, par exemple des harmoniques d'ordre deux ou trois, de la fréquence de fonctionnement des horloges les plus rapides sont voisines de la fréquence de communication radio de la station mobile avec une base de transmission fixe. Par exemple, pour un réseau de radio communication fonctionnant à des fréquences porteuses dans la bande 68 - 88 MHz, on utilise actuellement des horloges fonctionnant à 40 MHz dont l'harmonique d'ordre deux est voisine de la fréquence porteuse à laquelle est effectuée la transmission.

Une telle similitude de fréquence crée des perturbations de fonctionnement du dispositif de radio communication. En particulier, les signaux radio reçus par une station mobile sont généralement de faible niveau et leur réception est perturbée par le fonctionnement des horloges de l'unité de traitement numérique, tandis que l'émission de signaux de radio communication par la station mobile est au contraire de niveau très élevé et risque de perturber le fonctionnement de l'unité de traitement numérique. Afin d'éviter de telles perturbations, on sépare généralement par des blindages l'unité de traitement numérique des organes servant à l'émission et à la réception. De tels blindages sont coûteux et nuisent à la souplesse d'implantation des différents organes à l'intérieur de la station mobile.

Un but de la présente invention est de proposer un dispositif de radio communication ne présentant pas les inconvénients des dispositifs antérieurs.

En vue de la réalisation de ce but, on prévoit selon l'invention un dispositif de radio communication à multiplexage dans le temps pour une émission et une réception de signaux radio séparés par des intervalles de temps, ce dispositif comportant une antenne, un organe émetteur-récepteur couplé à l'antenne, un organe de sélection de canal associé à l'organe émetteur-récepteur, un organe de conversion analogique/numérique associé à l'organe de sélection de canal, une unité de traitement numérique associée à l'organe de conversion analogique/numérique, et un organe de commande de temps pour commander une vitesse de fonctionnement d'horloges associées à l'unité de traitement numérique et à l'organe de conversion analogique/numérique et des moyens pour réduire l'activité de l'unité de traitement numérique pendant l'émission et/ou la réception de signaux radio. Ainsi, pendant les instant où l'activité de l'unité de traitement numérique est réduite on diminue les perturbations électromagnétiques qui pourraient influencer l'émission ou la réception.

Selon une version avantageuse de l'invention, la réduction d'activité de l'unité de traitement numérique est obtenue par abaissement de la vitesse de fonctionnement d'au moins une horloge associée à cette unité de traitement numérique.

Ainsi, pendant les instants où le fonctionnement des organes associés aux horloges rapides pourrait perturber la réception des signaux radio ou être perturbé par l'émission des signaux radio, l'écart de fréquence entre les horloges et la fréquence porteuse des signaux radio est augmenté et on minimise donc les perturbations correspondantes.

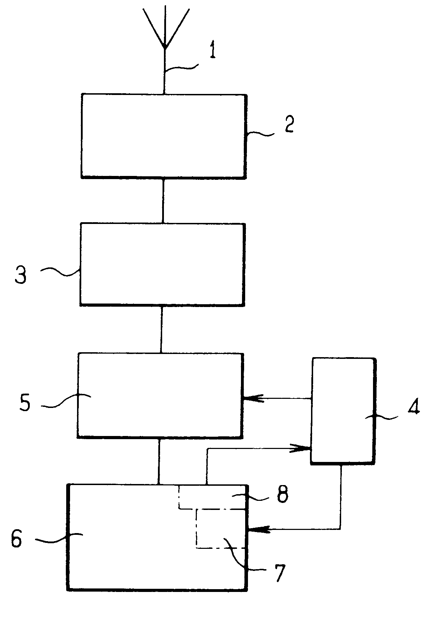

D'autres caractéristiques et avantages de l'invention apparaîtront à la lecture de la description qui suit d'un mode de réalisation particulier non limitatif de l'invention en liaison avec la figure unique ci-jointe qui représente un schéma par blocs du dispositif de communication selon l'invention.

En référence à la figure, le dispositif de radio communication à multiplexage dans le temps selon l'invention comporte une antenne 1, un organe émetteur-récepteur 2 couplé à l'antenne, un organe de sélection de canal 3 associé à l'organe émetteur-récepteur 2. Un organe de conversion analogique/numérique 5 associé à l'organe de sélection de canal 3 est relié également à un organe de commande de temps 4 contenant une horloge pilote reliée à une ou plusieurs horloges de l'organe de sélection de canal pour assurer une vitesse de fonctionnement de ces horloges en fonction des besoins habituels de cet organe. Une unité de traitement numérique 6 destinée à assurer le décodage des informations reçues sous leur forme numérique ou l'encodage des informations à transmettre est reliée à l'organe de conversion analogique/numérique 5 ainsi qu'à l'organe de commande de temps 4. Alors que les horloges associées à l'organe de conversion analogique/numérique 5 sont habituellement des horloges relativement lentes ne créant pas une perturbation sur les signaux reçus et qui ne sont pas perturbées par les signaux émis, l'unité de traitement numérique 6 contient généralement au moins une horloge 7 très rapide et dont la fréquence propre, ou des harmoniques d'ordre faible de cette fréquence, est voisine de la fréquence porteuse des signaux radio. Pour éviter les perturbations décrites ci-dessus qui résultent de la similitude de ces fréquences, on prévoit selon le mode de réalisation illustré des moyens de détection 8 des instants correspondant à une émission ou à une réception de signaux radio afin de commander un abaissement de la vitesse de fonctionnement de l'horloge 7, ou des horloges rapides associées à l'unité de traitement numérique pendant ces instants ou une partie de ces instants. Dans le cas où les instants d'émission et de réception de signaux radio ne sont pas déterminés a priori, par exemple dans le cas d'une station mobile qui n'est pas en contact permanent avec une base de transmission fixe et/ou qui est susceptible d'être à des distances très variables de la base de transmission fixe, les moyens de détection des instants d'émission et de réception sont de préférence mis en oeuvre pendant la phase d'apprentissage pendant laquelle la station mobile se synchronise avec la base de transmission fixe et est ainsi informée des instants de réception et d'émission. Une partie des informations nécessaires pour déterminer ces instants, par exemple l'écart entre les instants d'émission et les instants de réception et la durée de l'émission et de la réception peuvent éventuellement être introduites de façon permatente dans l'unité de traitement numérique 6 ou dans l'organe de commande de temps 4 au moment de la fabrication du dispositif de radio communication ou au moment de sa mise en oeuvre initiale.

On sait que les données numériques traitées par l'unité de traitement numérique 6 sont des données qui sont mises en mémoire à la sortie de l'organe de conversion analogique/numérique 5. Le degré d'abaissement de la vitesse de fonctionnement des horloges de l'unité de traitement numérique 6 dépendra donc essentiellement de la nature des composants permettant la mise en mémoire de ces données. Dans le cas de composants de mémoire statiques, on pourra aller jusqu'à un arrêt complet des horloges de l'unité de traitement numérique, tandis que pour des composants de mémoire dynamiques il sera nécessaire de maintenir une vitesse de fonctionnement minimum afin d'éviter la perte des données mémorisées.

Bien entendu l'invention n'est pas limitée au mode de réalisation décrit ci-dessus et on peut y apporter des variantes de réalisation sans sortir du cadre de l'invention. En particulier, bien que l'invention ait été décrite en liaison avec un dispositif comportant un organe de conversion analogique/numérique séparé de l'organe de sélection de canal, l'invention s'applique également par un dispositif de radio communication dans lequel l'organe de conversion analogique/numérique est intégré à l'organe de sélection de canal en particulier lorsque l'organe de conversion analogique/numérique est intégré à une boucle de commande automatique de gain.

De même, l'invention a été décrite de façon schématique avec une seule ligne assurant l'émission et la réception mais elle peut être mise en oeuvre avec un dispositif de radio communication comportant une ligne d'émission et une ligne de réception séparées, ces deux lignes étant alors associées à un organe de gestion commun qui sert également à déterminer les moments où la vitesse de fonctionnement de certaines horloges doit être abaissée.

Bien que l'invention ait été décrite en liaison avec un dispositif dans lequel la baisse d'activité de l'unité de traitement numérique est obtenue par un abaissement de la vitesse de fonctionnement de certaines horloges, cette baisse d'activité peut être obtenue par d'autres moyens, par exemple en effectuant les tâches de calcul rapide par un microprocesseur interne ou un circuit externe dont le fonctionnement est réduit, voire interrompu pendant les périodes critiques sans agir sur la vitesse de fonctionnement des horloges.

## Revendications

1. Dispositif de radio communication à multiplexage dans le temps pour une émission et une réception de signaux radio séparés par des intervalles de temps, ce dispositif comportant une antenne (1), un organe émetteur-récepteur (2) couplé à l'antenne, un organe de sélection de canal (3) associé à l'organe émetteur-récepteur, un organe de conversion analogique/numérique (5) associé à l'organe de sélection de canal, une unité de traitement numérique (6) associée à l'organe de conversion analogique/numérique, et un organe de commande de temps (4) pour commander une vitesse de fonctionnement d'horloges associées à l'unité de traitement numérique et à l'organe de conversion analogique/numérique, caractérisé en ce qu'il comporte des moyens pour réduire l'activité de l'unité de traitement numérique pendant l'émission et/ou la réception de signaux radio.

2. Dispositif de radio communication selon la revendication 1, caractérisé en ce que la réduction d'activité de l'unité de traitement numérique est obtenue par abaissement de la vitesse de fonctionnement d'au moins une horloge (7) associée à cette unité de traitement numérique.

## Patentansprüche

1. Einrichtung für Zeit-Multiplex-Funkkommunikation zum Senden und Empfangen von Funksignalen, die durch Zeitintervalle getrennt sind, umfassend eine Antenne (1), ein mit der Antenne gekoppeltes Sender-Empfängerorgan (2), ein dem Sender-Empfängerorgan zugeordnetes Kanalwahlorgan (3), ein dem Kanalwahlorgan zugeordnetes Analog/Digital-Umwandlungsorgan (5), eine dem Analog/Digital-Umwandlungsorgan zugeordnete digitale Verarbeitungseinheit (6) und ein Zeitsteuerungsorgan (4) zur Steuerung einer Betriebsgeschwindigkeit von Zeitgebern, die der digitalen Verarbeitungseinheit und dem Analog/Digital-Umwandlungsorgan zugeordnet sind, gekennzeichnet durch Mittel zum Drosseln des Betriebs der digitalen Verarbeitungseinheit während des Sendens und/oder Empfangens von Funksignalen.

2. Funkkommunikationseinrichtung nach Anspruch 1, dadurch gekennzeichnet, daß die Drosselung des Betriebs der digitalen Verarbeitungseinheit durch Herabsetzen der Betriebsgeschwindigkeit zumindest eines Taktgebers (7) erreicht wird, der dieser digitalen Verarbeitungseinheit zugeordnet ist.

## Claims

1. A time-multiplex radio communication device for transmission and reception of radio signals which are separated by time intervals, said device comprising an antenna (1), a transmitter-receiver member (2) coupled to the antenna, a channel selection member (3) associated with the transmitter-receiver member, an analog-digital conversion member (5) associated with the channel selection member, a digital processing unit (6) associated with the analog-digital conversion member, and a time control member (4) for controlling a speed of operation of clocks associated with the digital processing unit and the analog-digital conversion member, characterised in that it comprises means for reducing the activity of the digital processing unit during transmission and/or reception of radio signals.

2. A radio communication device according to claim 1 characterised in that the reduction in activity of the digital processing unit is achieved by reducing the speed of operation of at least one clock (7) associated with said digital processing unit.
